(19) Europäisches Patentamt
European Patent Office
Office européen des brevets

(11) **EP 3 532 272 B1**

(12) **EUROPÄISCHE PATENTSCHRIFT**

(45) Veröffentlichungstag und Bekanntmachung des Hinweises auf die Patenterteilung:
**16.11.2022 Patentblatt 2022/46**

(21) Anmeldenummer: **17787446.8**

(22) Anmeldetag: **25.10.2017**

(51) Internationale Patentklassifikation (IPC):
**B29C 67/00** (2017.01)    **B29C 64/165** (2017.01)
**B29C 64/153** (2017.01)    **B29C 64/141** (2017.01)
**B29C 71/02** (2006.01)    **B29K 75/00** (2006.01)
**B33Y 10/00** (2015.01)    **B33Y 40/00** (2020.01)
**B33Y 80/00** (2015.01)    **B33Y 70/00** (2020.01)

(52) Gemeinsame Patentklassifikation (CPC):
**B29C 64/141; B33Y 10/00; B33Y 40/20;**
**B33Y 70/00; B33Y 70/10; B33Y 80/00;**
B29C 64/118; B29C 64/153; B29C 64/165;
B29C 2071/022; B29K 2075/00; B29K 2995/0046;
B29K 2995/007

(86) Internationale Anmeldenummer:
**PCT/EP2017/077221**

(87) Internationale Veröffentlichungsnummer:
**WO 2018/077913 (03.05.2018 Gazette 2018/18)**

(54) **VERFAHREN ZUM BEHANDELN WENIGSTENS EINES TEILS DER OBERFLÄCHE EINES 3D-GEDRUCKTEN GEGENSTANDS**

METHOD FOR TREATING AT LEAST ONE PORTION OF THE SURFACE OF A 3D PRINTED OBJECT

PROCÉDÉ DE TRAITEMENT D'AU MOINS UNE PARTIE DE LA SURFACE D'UN OBJET IMPRIMÉ EN 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2016 EP 16195565**

(43) Veröffentlichungstag der Anmeldung:
**04.09.2019 Patentblatt 2019/36**

(73) Patentinhaber: **Covestro Deutschland AG**
**51373 Leverkusen (DE)**

(72) Erfinder:
• **ACHTEN, Dirk**
**51375 Leverkusen (DE)**
• **BÜSGEN, Thomas**
**51377 Leverkusen (DE)**
• **WAGNER, Roland**
**51375 Leverkusen (DE)**
• **METTMANN, Bettina**
**41542 Dormagen (DE)**
• **AKBAS, Levent**
**58455 Witten (DE)**
• **GUIU, Julien**
**40477 Düsseldorf (DE)**

(74) Vertreter: **Davepon, Björn**
**Patentanwaltskanzlei Davepon**
**Schloss Dyck**
**41363 Jüchen (DE)**

(56) Entgegenhaltungen:
WO-A1-2011/089208     WO-A1-2016/022449
DE-A1-102008 027 315

## Beschreibung

Die vorliegende Erfindung betrifft ein Verfahren zum Behandeln wenigstens eines Teils einer Oberfläche eines Gegenstands, der durch ein additives Fertigungsverfahren hergestellt wurde. Die vorliegende Patentschrift offenbart weiterhin einen so behandelten Gegenstand. Gegenstände, welche mittels additiver Fertigungsverfahren ("3D-Druck") aus hergestellt wurden, können aufgrund ihrer Herstellungsweise unebene Oberflächen aufweisen. Dieses gilt hinsichtlich thermoplastischer Aufbaumaterialien sowohl für mit pulverbasierten Verfahren hergestellte Gegenstände mit einer durch die Partikelgröße im Pulver und die Schichtdicke jeder neu aufgetragenen Pulverschicht bestimmten Unebenheit als auch für mit Schmelzschichtungsverfahren mit einer durch die Dicke des aufgetragenen Strangs bestimmten Unebenheit. Solche Unebenheiten sind aus Sicht einer Haptik und Optik des Gegenstands und aufgrund der Tatsache, dass unebene Oberflächen leichter verschmutzen, jedoch unerwünscht.

Im Stand der Technik hat es nicht an Versuchen gefehlt, durch eine Nachbehandlung der Oberfläche von 3D-gedruckten Gegenständen ihre äußere Erscheinung oder ihre technische Funktion zu verbessern. Eine Material abtragende, mechanische Nachbehandlung (einschließlich Sandstrahlen) ist in vielen Fällen nicht gewünscht. Es können die Gegenstände auch mit Lösungsmitteldämpfen behandelt werden, welche die Oberflächen anlösen und nach Verdampfen des Lösungsmittels eine geglättete Oberfläche erhalten wird. Der Einsatz von organischen Lösungsmitteln ist jedoch grundsätzlich problematisch.

WO 2011/089208 A1 offenbart ein Verfahren zur Oberflächenbehandlung lasergesinterter Kunststoffgegenstände, wobei man die folgenden Schritte ausführt: a) Glätten der Oberflächen der Kunststoffgegenstände; b) Waschen der geglätteten Kunststoffgegenstände; c) Färben und/oder Beschichten der Kunststoffgegenstände und d) Versiegeln und/oder Imprägnieren der Oberflächen der Kunststoffgegenstände.

DE 10 2015 205609 A1 beschreitet einen anderen Weg, indem eine zusätzliche Schicht auf die Oberfläche des Gegenstands appliziert wird. Das dort beschriebene Verfahren zum pulverbettbasierten additiven Erzeugen eines Bauteils, bei dem das Bauteil in einem Pulverbett aus Pulverpartikeln durch Aufschmelzen mit einem Energiestrahl lagenweise hergestellt wird, zeichnet sich dadurch aus, dass nach Abschluss der Herstellung einer Lage des Bauteils auf das Bauteil eine mit Zusatzpartikeln gefüllte Folie aufgebracht wird, wobei sich die Zusatzpartikel in ihren Eigenschaften von den Pulverpartikeln unterscheiden und mit dem Energiestrahl das Folienmaterial der Folie entfernt wird, wobei der Energieeintrag des Energiestrahls ausreicht, um eine bleibende Verbindung der Zusatzpartikel mit dem Bauteil hervorzurufen.

Das Dokument WO 2016/022449 A1 beschreibt das Kaschieren eines 3D-gedruckten Gegenstandes mit einer Folie, jedoch offenbart nicht das direkte Glätten der Oberfläche durch Druck und Temperatur.

Das Dokument DE 10 2008 027315 A1 offenbart ein additives Fertigungsverfahren zur Herstellung eines Gegenstandes, wobei die Oberfläche der zuvor gebildeten Kunststoffflächenbereiche mit einem beheiztem Rakel, der offensichtlich einen Drück auf die Oberfläche ausübt, geglättet wird.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein Verfahren anzugeben, mit dem die Oberflächenpräsentation eines additiv herstellten Gegenstands verbessert wird.

Erfindungsgemäß gelöst wird die Aufgabe durch ein Verfahren gemäß Anspruch 1. Ein Gegenstand mit einer durch ein erfindungsgemäßes Verfahren behandelten Oberfläche ist in der vorliegenden Patentschrift offenbart. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren nach Anspruch 1 zum Behandeln wenigstens eines Teils einer Oberfläche eines Gegenstands, umfassend den Schritt:

I) Bereitstellen des Gegenstands, wobei wenigstens ein Teil einer Oberfläche des Gegenstands durch ein additives Fertigungsverfahren aus einem Aufbaumaterial hergestellt wurde, wobei das Aufbaumaterial eine Temperatur $T_{G'}$ aufweist, bei der der Speichermodul G' des Aufbaumaterials (bestimmt durch dynamisch-mechanische Analyse gemäß ISO 6721 bei einer Kreisfrequenz von 1/s) 10 MPa beträgt;

wobei das Behandeln wenigstens eines Teils der Oberfläche das Einwirken von Druck auf die Oberfläche bei einer Temperatur der Oberfläche, welche oberhalb der Temperatur $T_{G'}$ liegt, umfasst.

Gemäß Schritt I) des Verfahrens wird eine durch ein additives Fertigungsverfahren ("3D-Drucken") hergestellte Oberfläche bereitgestellt. Der Gegenstand kann ein vollständig durch ein additives Fertigungsverfahren hergestellter Gegenstand sein. Erfindungsgemäß mit eingeschlossen ist aber auch der Fall, dass ein Substrat mittels eines additiven Fertigungsverfahrens mit einer neuen Oberfläche versehen wurde. Diese Oberfläche kann durch eine oder mehrere Lagen des Aufbaumaterials gebildet werden. Die Einheit von Substrat und Oberfläche wird dann im Kontext der Erfindung auch als "Gegenstand" bezeichnet.

Ein Beispiel für den letzteren Fall ist ein Obermaterial für Schuhe, bei dem auf ein Basismaterial eine oder mehrere Lagen durch ein additives Fertigungsverfahren, insbesondere ein Schmelzschichtungsverfahren, aufgetragen wurden und somit diese Lage oder Lagen die zu behandelnde Oberfläche darstellen.

Das additive Fertigungsverfahren kann beispielsweise ausgewählt sein aus Schmelzschichtung (Fused Filament Fabrication, FFF oder Fused Deposition Modeling, FDM), Selective Laser Sintering, Selective Laser Melting oder High Speed Sintering.

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FDM/FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS).

Für die Zwecke der vorliegenden Erfindung wird dem Aufbaumaterial eine Temperatur $T_{G'}$ zugeordnet, bei der der Speichermodul G' des Aufbaumaterials (bestimmt durch dynamisch-mechanische Analyse gemäß ISO 6721 bei einer Kreisfrequenz von 1/s) 10 MPa beträgt. Ohne auf eine Theorie festgelegt zu sein wird angenommen, dass das Aufbaumaterial bei Temperaturen von $\geq T_{G'}$ und entsprechend bei einem Speichermodul G' von $\leq 10$ MPa durch Einwirken von Druck wenigstens an seiner Oberfläche plastisch verformbar ist. Diese Temperatur kann beispielsweise $\geq 101\%$ bis $\leq 150\%$, bevorzugt $\geq 105\%$ bis $\leq 140\%$ und mehr bevorzugt $\geq 110\%$ bis $\leq 130\%$ der Temperatur $T_{G'}$ betragen, wobei zur Berechnung dieses Wertes die in eine absolute Temperatur (in Kelvin) umgerechnete Temperatur $T_{G'}$ zugrunde gelegt wird.

Alternativ kann die Temperatur, bei der das Aufbaumaterial verformbar ist, bevorzugt im Bereich von $T_{G'}$ + 1 °C bis $T_{G'}$ + 30 °C, bevorzugt $T_{G'}$ + 2 °C bis $T_{G'}$ + 25 °C, besonders bevorzugt $T_{G'}$ + 3 °C bis $T_{G'}$ + 20 °C liegen.

Des Weiteren sollte die Temperatur im erfindungsgemäßen Prozess während der Verformung bevorzugt so gewählt werden, dass das Aufbaumaterial bei dieser Temperatur einen Modul von > 0,05 MPa, oder bevorzugt > 0,1 MPa, oder bevorzugt > 0,3 MPa, oder bevorzugt > 0,8 MPa, oder bevorzugt > 1 MPa besitzt. Dadurch wird gewährleistet, dass das Objekt aus dem Aufbaumaterial nicht massiv verformt wird, sondern nur die Oberfläche fließförmig wird.

Das Einwirken von Druck kann beispielsweise durch Kalandrieren oder Aufpressen einer beheizten Oberfläche, mit oder ohne Trennschichten, erfolgen. Der ausgeübte Druck auf die Oberfläche des Gegenstands kann $\geq 10$ kPa bis $\leq 1000$ kPa betragen. Vorzugsweise beträgt der Druck $\geq 100$ kPa bis $\leq 750$ kPa, mehr bevorzugt $\geq 250$ kPa bis $\leq 500$ kPa.

Das Aufbaumaterial umfasst vorzugsweise ein thermoplastisches Elastomer (mehr bevorzugt ein thermoplastisches Polyurethan-Elastomer), welches eine Bruchdehnung im Zugversuchstest nach DIN 53504 von $\geq 50\%$ zeigt. Darüber hinaus kann das Aufbaumaterial beispielsweise einen Druckverformungsrest nach 40% Kompression (DIN ISO 815-1) von $\leq 5\%$ aufweisen.

Das Aufbaumaterial kann noch weitere Additive wie Füllstoffe, Stabilisatoren und dergleichen, aber auch weitere Polymere, enthalten. Der Gesamtgehalt an Additiven im Aufbaumaterial kann beispielsweise ≥ 0,1 Gewichts-% bis ≤ 10 Gewichts-%, bevorzugt ≥ 1 Gewichts-% bis ≤ 5 Gewichts-%, betragen.

Ein bevorzugtes Verfahren zum Behandeln wenigstens eines Teils der Oberfläche eines Gegenstands umfasst den Schritt:

I) Bereitstellen des Gegenstands, wobei wenigstens ein Teil einer Oberfläche des Gegenstands durch ein additives Fertigungsverfahren aus einem Aufbaumaterial hergestellt wurde, wobei das Aufbaumaterial eine Temperatur $T_{G'}$ aufweist, bei der der Speichermodul G' des Aufbaumaterials (bestimmt durch dynamisch-mechanische Analyse gemäß ISO 6721 bei einer Kreisfrequenz von 1/s) 10 MPa beträgt. Das beanspruchte Verfahren umfasst weiterhin die Schritte:

II) Platzieren des Gegenstands in ein evakuierbares Volumen mit einer Begrenzung, welche flexible Abschnitte umfasst, die zur Kontaktierung mit der Oberfläche des Gegenstands vorgesehen sind, wobei das Material der Begrenzung derart ausgewählt ist, dass es keine dauerhafte Verbindung zu dem über seine Temperatur $T_{G'}$ erwärmten und anschließend unterhalb seiner Temperatur $T_{G'}$ abgekühlten Aufbaumaterial eingeht;
III) Evakuieren des Volumens, so dass wenigstens ein Teil der flexiblen Abschnitte der Begrenzung des Volumens die Oberfläche des Gegenstands kontaktieren;
IV) Erwärmen wenigstens eines Teils der Oberfläche (110) des Gegenstands, während das Volumen weiterhin evakuiert bleibt, für eine vorbestimmte Zeitdauer auf eine Temperatur, welche oberhalb der Temperatur $T_{G'}$ liegt;
V) Abkühlen der Oberfläche des Gegenstands auf eine Temperatur, welche unterhalb der Temperatur $T_{G'}$ liegt;
VI) Entfernen des Gegenstands aus dem Volumen.

Gemäß Schritt II) des Verfahrens wird der Gegenstand in ein evakuierbares Volumen platziert. Das Volumen wird durch eine Begrenzung begrenzt, welche flexible Abschnitte umfasst. Dieses kann in einer Apparatur erfolgen, welche zur Durchführung von Harzinfusionsverfahren in der Herstellung von Faserverbundwerkstoffen geeignet ist. Eine andere geeignete Anlage ist eine Vakuumlaminieranlage, insbesondere eine Vakuumlaminieranlage mit einem beheizbaren Metallboden. In solch einer Apparatur kann der Boden der Infusionskammer, auf den der Gegenstand platziert wird, einen unflexiblen Abschnitt der Begrenzung ausmachen und eine Vakuumfolie, welche auf den Gegenstand gelegt wird und mit entsprechenden Dichtungen gegenüber dem Boden versehen ist, einen flexiblen Abschnitt der Begrenzung ausmachen. Um ein Anhaften der Begrenzung am Gegenstand zu verhindern, ist das Material der Begrenzung, (insbesondere, des Teils der Begrenzung, welcher im Verlauf des Verfahrens den Gegenstand berührt), derart ausgewählt, dass keine dauerhafte Verbindung zu dem Aufbaumaterial bei der Durchführung des Verfahrens aufgebaut wird. Hierbei ist eine dauerhafte Verbindung als eine solche Verbindung zu verstehen, welche sich nicht für den Gegenstand, die Oberfläche des Gegenstands, die Begrenzung oder einer Kombination hiervon zerstörungsfrei lösen lässt oder welche sich nicht für den Gegenstand oder die Oberfläche des Gegenstands deformationsfrei lösen lässt. Es kann ferner vorgesehen sein, dass das Ablösen der Begrenzung von dem Gegenstand durch den Einsatz von Formtrennmitteln wie PTFE-Spray unterstützt wird.

In Schritt III) des Verfahrens wird das Volumen evakuiert, so dass wenigstens die flexiblen Abschnitte der Begrenzung sich um den Gegenstand legen und Druck auf die Oberfläche des Gegenstands ausüben. Im evakuierten Volumen kann beispielsweise ein Druck von ≤ 500 mbar, vorzugsweise ≤ 10 mbar und mehr bevorzugt ≤ 1 mbar herrschen. Weiterhin bevorzugt herrscht im evakuierten Volumen ein Druck von ≤ 200 mbar, oder bevorzugt von ≤ 100 mbar.

Während weiterhin ein Vakuum am Volumen angelegt bleibt, wird in Schritt IV) die Oberfläche des Gegenstands erwärmt. Dass unterhalb der Oberfläche liegende Bereiche des Gegenstands auch erwärmt werden können, ist erfindungsgemäß mit eingeschlossen. Das Erwärmen kann beispielsweise für eine vorbestimmte Zeitdauer von ≥ 5 Sekunden bis ≤ 60 Minuten, vorzugsweise ≥ 1 Minute bis ≤ 45 Minuten, oder bevorzugt ≥ 2 Minute bis ≤ 30 Minuten und mehr bevorzugt ≥ 10 Minute bis ≤ 30 Minuten durchgeführt werden. Die Temperatur, auf die die Oberfläche während der vorbestimmten Zeitdauer erwärmt wird, kann beispielsweise ≥ 101% bis ≤ 150%, bevorzugt ≥ 105% bis ≤ 140% und mehr bevorzugt ≥ 110% bis ≤ 130% der Temperatur $T_{G'}$ betragen, wobei zur Berechnung dieses Wertes die in eine absolute Temperatur (in Kelvin) umgerechnete Temperatur $T_{G'}$ zugrunde gelegt wird. Das Erwärmen der Oberfläche lässt sich beispielsweise dadurch erreichen, dass Ensemble aus Gegenstand und Begrenzung in eine beheizbare Kammer wie einen Ofen platziert wird oder durch einen IR-Strahler erwärmt wird.

Alternativ kann die Temperatur, auf die die Oberfläche während der vorbestimmten Zeitdauer erwärmt wird, im Bereich von $T_{G'}$ + 1 °C bis $T_{G'}$ + 30 °C, oder bevorzugt von $T_{G'}$ + 2 °C bis $T_{G'}$ + 25 °C, oder bevorzugt von $T_{G'}$ + 3 °C bis $T_{G'}$ + 20 °C liegen.

Durch das Erwärmen der Oberfläche auf eine Temperatur oberhalb von $T_{G'}$ wird, in Kombination mit dem durch die Begrenzung ausgeübten Druck auf die Oberfläche des Gegenstands, die Oberflächenkontur des Gegenstands der Oberflächenkontur der Begrenzung angepasst. Insbesondere kann bei glatten Begrenzungen die Oberfläche des Gegenstands geglättet werden.

Nach Ablauf der vorbestimmten Zeitdauer wird gemäß Schritt V) die Oberfläche des Gegenstands auf eine Temperatur unterhalb von $T_{G'}$ abgekühlt. Das Abkühlen kann passiv durch Abschalten einer Heizung oder aktiv durch Einsatz eines Kühlfluids erfolgen. Es ist möglich, dass das Abkühlen erfolgt, solange noch ein Vakuum am Volumen anliegt. Es ist aber auch möglich, dass vor dem Abkühlen erst das Vakuum aufgehoben wird, indem der Zutritt von Luft in das Volumen hinein gestattet wird.

Zweckmäßigerweise wird die Oberfläche auf eine Temperatur von $\geq$ 10% bis $\leq$ 90%, bevorzugt $\geq$ 20% bis $\leq$ 80% und mehr bevorzugt $\geq$ 30% bis $\leq$ 60% der Temperatur $T_{G'}$ abgekühlt, bevor anschließend in Schritt VI) der Gegenstand aus dem Volumen entfernt wird. Auch hier wird zur Berechnung dieses Wertes die in eine absolute Temperatur (in Kelvin) umgerechnete Temperatur $T_{G'}$ zugrunde gelegt. Alternativ können auch Temperaturen in Celsius verwendet werden.

Insgesamt erlaubt das erfindungsgemäße Verfahren somit eine Verbesserung der Erscheinung der Oberflächen von 3D-gedruckten Gegenständen, ohne dass Lösungsmittel oder Material abtragende Verfahren eingesetzt werden müssen.

In einer bevorzugten Ausführungsform weist die Begrenzung des evakuierbaren Volumens keine inflexiblen Abschnitte auf. So kann die Begrenzung des evakuierbaren Volumens beispielsweise als flexibler Kunststoffbeutel ausgeführt sein.

In einer weiteren bevorzugten Ausführungsform ist das Material der flexiblen Abschnitte der Begrenzung des evakuierbaren Volumens ausgewählt aus der Gruppe umfassend: Polyethylen, Polypropylen, Polyvinylchlorid, Polytetrafluoroethylen oder einer Kombination aus mindestens zwei hiervon. Es ist möglich, dass die vorgenannten Polymere auch Teile eines Schichtenverbundes sind, in dem die dem Gegenstand zugewandte Seite der Begrenzung aus einem oder mehreren dieser Polymere aufgebaut ist.

In einer weiteren bevorzugten Ausführungsform ist das Material der flexiblen Abschnitte der Begrenzung des evakuierbaren Volumens ausgewählt aus der Gruppe umfassend: vernetztes Polyethylen, vernetztes Polypropylen, vernetztes Polyvinylchlorid, vernetztes Polytetrafluoroethylen, Silikonkautschuk, Fluorsilikonkautschuk, Fluorkautschuk, oder einer Kombination aus mindestens zwei hiervon. Es ist möglich, dass die vorgenannten Polymere auch Teile eines Schichtenverbundes sind, in dem die dem Gegenstand zugewandte Seite der Begrenzung aus einem oder mehreren dieser Polymere aufgebaut ist.

Bevorzugt ist das Material des flexiblen Abschnittes mit einer Antihaftbeschichtung, bevorzugt auf Basis von Silikon oder Fluorsilikon ausgerüstet.

In einer weiteren bevorzugten Ausführungsform umfasst die Begrenzung ein oder mehrere Heizelemente. Hierbei kann es sich um in die Begrenzung eingearbeitete Heizdrähte oder Kanäle für ein Heizfluid handeln.

Bevorzugt üben in Schritt II) die flexiblen Abschnitte der Begrenzung einen durchschnittlichen Druck von $\geq$ 10 kPa bis $\leq$ 1000 kPa auf die Oberfläche des Gegenstands aus. Vorzugsweise beträgt der Druck $\geq$ 50 kPa bis $\leq$ 750 kPa, mehr bevorzugt $\geq$ 100 kPa bis $\leq$ 500 kPa. Der Aufbau eines entsprechenden Drucks kann dadurch unterstützt werden, dass das Ensemble mit Gegenstand und Begrenzung in eine Überdruckkammer platziert wird.

In einer weiteren bevorzugten Ausführungsform üben in Schritt II) die flexiblen Abschnitte der Begrenzung einen durchschnittlichen Druck von $\geq$ 10 kPa bis $\leq$ 1000 kPa auf die Oberfläche des Gegenstands aus. Vorzugsweise beträgt der Druck $\geq$ 100 kPa bis $\leq$ 750 kPa, mehr bevorzugt $\geq$ 250 kPa bis $\leq$ 500 kPa. Der Aufbau eines entsprechenden Drucks kann dadurch unterstützt werden, dass das Ensemble mit Gegenstand und Begrenzung in eine Überdruckkammer platziert wird.

In einer weiteren bevorzugten Ausführungsform umfasst die Herstellung des Gegenstands mittels des additiven Fertigungsverfahrens die Schritte:

- Auftragen einer Schicht aus, das Aufbaumaterial aufweisenden, Partikeln auf eine Zielfläche;

- Einwirken von Energie auf einen ausgewählten Teil der Schicht, entsprechend einem Querschnitt des Gegenstands, so dass die Partikel im ausgewählten Teil verbunden werden;

- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

Gemäß dieser Ausführungsform handelt es sich um ein Pulversinter- oder Pulverschmelzverfahren. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq$ 2 bis $\leq$ 20 Wiederholungen für Auftragen und Bestrahlen durchgeführt werden.

Es ist bevorzugt, dass mindestens 90 Gewichts-% der Partikel einen Teilchendurchmesser von $\leq 0.25$ mm, bevorzugt $\leq 0.2$ mm, besonders bevorzugt $\leq 0.15$ mm aufweisen. Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel der Partikel untereinander bewirken.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:

- Bestrahlen eines ausgewählten Teils der Schicht, entsprechend einem Querschnitt des Gegenstandes, mit einem Energiestrahl, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu$m. Der Laser kann als Halbleiterlaser oder als Gaslaser ausgeführt sein. Denkbar ist auch ein Elektronenstrahl.

In einer weiteren bevorzugten Ausführungsform umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:

- Auftragen einer Flüssigkeit auf einen ausgewählten Teil der Schicht, entsprechend einem Querschnitt des Gegenstandes, wobei die Flüssigkeit die Absorption der einwirkenden Energie in den von ihr kontaktierten Bereichen der Schicht relativ zu den nicht von ihr kontaktierten Bereichen erhöht;

- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer weiteren bevorzugten Ausführungsform umfasst die Herstellung des Gegenstands mittels des additiven Fertigungsverfahrens die Schritte:

- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;

- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;

- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

Bei dieser Ausführungsform handelt es sich um ein Schmelzschichtungs- oder Fused Deposition Modeling (FDM)-Verfahren. Ist die Anzahl der Wiederholungen für das Auftragen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq 1$ bis $\leq 20$ Wiederholungen

für das Auftragen durchgeführt werden.

Die einzelnen Filamente, welche aufgetragen werden, können einen Durchmesser von $\geq 30\ \mu$m bis $\leq 2000\ \mu$m aufweisen, bevorzugt $\geq 40\ \mu$m bis $\leq 1000\ \mu$m und besonders bevorzugt $\geq 50\ \mu$m bis $\leq 500\ \mu$m.

Der erste Schritt dieser Ausführungsform des Verfahrens betrifft den Aufbau der ersten Lage auf einen Träger. Anschließend wird der zweite Schritt so lange ausgeführt, in dem auf zuvor aufgetragene lagen des Aufbaumaterials weiter Lagen aufgetragen werden, bis das gewünschte Endergebnis in Form des Gegenstands erhalten wird. Das zumindest teilweise aufgeschmolzene Aufbaumaterial verbindet sich mit bereits bestehenden Lagen des Materials, um eine Struktur in z-Richtung aufzubauen. Es ist aber möglich, dass nur eine Lage des Aufbaumaterials auf einen Träger aufgetragen wird.

In einer weiteren bevorzugten Ausführungsform umfasst das Aufbaumaterial ein thermoplastisches Polyurethan-Elastomer, welches einen Schmelzbereich (DSC, Differential Scanning Calorimetry; zweite Aufheizung mit Aufheizrate 5 K/min) von $\geq 20$ °C bis $\leq 200$ °C (bevorzugt $\geq 40$ °C bis $\leq 190$ °C, mehr bevorzugt $\geq 70$ °C bis $\leq 180$ °C) aufweist, eine Shore-Härte gemäß DIN ISO 7619-1 von $\geq 40$ A bis $\leq 85$ D (bevorzugt $\geq 50$ Shore Abis $\leq 80$ Shore D, mehr bevorzugt $\geq 60$ Shore A bis $\leq 75$ Shore D) aufweist und eine Schmelzvolumenrate (melt volume rate, MVR) gemäß ISO 1133 (190 °C, 10 kg) von $\geq 25$ bis $\leq 90$ (bevorzugt $\geq 30$ bis $\leq 150$, mehr bevorzugt $\geq 35$ bis $\leq 100$) cm$^3$/10 min aufweist.

Bevorzugt umfasst das Aufbaumaterial ein thermoplastisches Polyurethan-Elastomer, welches einen Schmelzbereich (DSC, Differential Scanning Calorimetry; zweite Aufheizung mit Aufheizrate 5 K/min) von $\geq 20$ °C bis $\leq 240$ °C (bevorzugt $\geq 40$ °C bis $\leq 220$ °C, mehr bevorzugt $\geq 70$ °C bis $\leq 200$ °C) aufweist, eine Shore-Härte gemäß DIN ISO 7619-1 von $\geq 40$ A bis $\leq 85$ D (bevorzugt $\geq 50$ Shore Abis $\leq 80$ Shore D, mehr bevorzugt $\geq 60$ Shore A bis $\leq 75$ Shore D) aufweist und eine Schmelzvolumenrate (melt volume rate, MVR) gemäß ISO 1133 (190 °C, 10 kg) von $\geq 25$ bis $\leq 190$ (bevorzugt $\geq 30$ bis $\leq 150$, mehr bevorzugt $\geq 35$ bis $\leq 100$) cm$^3$/10 min aufweist.

Bei dieser DSC-Messung wird das Material folgendem Temperaturzyklus unterworfen: 1 Minute bei minus 60 °C, danach Aufheizen auf 220 °C mit 20 Kelvin/Minute, dann Abkühlen auf minus 60 °C mit 5 Kelvin/Minute, dann 1 Minute bei minus 60 °C, dann Aufheizen auf 220 °C mit 20 Kelvin/Minute. Alternativ kann das Aufheizen im letzten Schritt auch auf 240 °C mit 20 Kelvin/Minute erfolgen.

In einer weiteren bevorzugten Ausführungsform umfasst das Aufbaumaterial ein thermoplastisches Polyurethan-Elastomer, welches

einen Schmelzbereich (DSC, Differential Scanning Calorimetry; zweite Aufheizung mit Aufheizrate 5 K/min) von $\geq$ 20 °C bis $\leq$ 200 °C (bevorzugt $\geq$ 40 °C bis $\leq$ 190 °C, mehr bevorzugt $\geq$ 70 °C bis $\leq$ 180 °C) aufweist, oder

einen Schmelzbereich (DSC, Differential Scanning Calorimetry; zweite Aufheizung mit Aufheizrate 5 K/min) von $\geq$ 20 °C bis $\leq$ 240 °C (bevorzugt $\geq$ 40 °C bis $\leq$ 220 °C, mehr bevorzugt $\geq$ 70 °C bis $\leq$ 200 °C) aufweist,

eine Shore-Härte gemäß DIN ISO 7619-1 von $\geq$ 40 Abis $\leq$ 85 D (bevorzugt $\geq$ 50 Shore Abis $\leq$ 80 Shore D, mehr bevorzugt $\geq$ 60 Shore A bis $\leq$ 75 Shore D) aufweist,

bei einer Temperatur T eine Schmelzvolumenrate (melt volume rate, MVR) gemäß ISO 1133 (10 kg) von 5 bis 15 (bevorzugt $\geq$ 6 bis $\leq$ 12, mehr bevorzugt $\geq$ 7 bis $\leq$ 10) cm$^3$/10 min aufweist und

eine Änderung der Schmelzvolumenrate (10 kg) bei einer Erhöhung dieser Temperatur T um 20 °C von $\leq$ 90 (bevorzugt $\leq$ 70, mehr bevorzugt $\leq$ 50) cm$^3$/10 min aufweist.

Auch bei dieser DSC-Messung wird das Material folgendem Temperaturzyklus unterworfen: 1 Minute bei minus 60 °C, danach Aufheizen auf 220 °C mit 20 Kelvin/Minute, dann Abkühlen auf minus 60 °C mit 5 Kelvin/Minute, dann 1 Minute bei minus 60 °C, dann Aufheizen auf 200 °C mit 20 Kelvin/Minute.

Alternativ wird bei dieser DSC-Messung das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

Das thermoplastische Elastomer, das bevorzugt ein thermoplastisches Polyurethanelastomer ist, weist bevorzugt ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur $T_x$ einen Ausgangswert von 5 bis 15 cm$^3$/10 min aufweist und durch Temperaturerhöhung um 20 °C auf $T_{x+20}$ um nicht mehr als 90 cm$^3$/10 min steigt.

In einer weiteren bevorzugten Ausführungsform umfasst das Aufbaumaterial ein thermoplastisches Polyurethanelastomer, das erhältlich ist aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 2,5

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,5-Pentamethylendiisocyanat, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'-Diphenylmethandiisocyanate oder 2,4'- Diphenylmethandiisocyanate, 4,4'-Diisocyanatodiphenylethan-(l ,2) und 1,5-Naphthylendiisocyanat. Vorzugsweise verwendet werden 1 ,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl-diethanolamine, beispielsweise N-Methyl-diethanolamin und Diole wie Ethylenglykol, 1,3- Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1 ,4-Butandiol, 1,5-Pentandiol, 1 ,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1 ,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol- 1 ,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1 ,2-Propandiol, 1,3-Propandiol, 1 ,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1 ,4-Di(b-hydroxyethyl)-hydrochinon, ethoxylierte Bisphenole, z.B. 1,4-Di(b- hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, trioder tetraalkylsubstituierte 4,4'-Diaminodiphenylmethane. Besonders bevorzugt werden als Kettenverlängerer Ethandiol, 1 ,4-Butandiol, 1,6-Hexandiol, 1,4-Di($\beta$-hydroxyethyl)-hydrochinon oder 1,4-Di($\beta$-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten mono funktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die erfindungsgemäß verwendeten thermoplastischen Poyurethanelastomere können als Hilfsund/oder Zusatzstoffe bis zu maximal 50 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

In einer weiteren bevorzugten Ausführungsform umfasst das Aufbaumaterial ein thermoplastisches Polyurethan-Elastomer, welches einen Schmelzbereich (DSC, differential scanning calorimetry; 2. Aufheizung mit Aufheizrate 5 K/min.) von ≥ 20 °C bis ≤ 100 °C aufweist und einen Betrag der komplexen Viskosität |$\eta^*$| (bestimmt durch Viskosimetriemessung in der Schmelze mit einem Platte/Platte-Oszillationsscherviskosimeter bei 100 °C und einer Kreisfrequenz von 1/s) von ≥ 10 Pas bis ≤ 1000000 Pas aufweist.

Dieses thermoplastische Elastomer weist einen Schmelzbereich von ≥ 20 °C bis ≤ 100 °C, vorzugsweise von ≥ 25 °C bis ≤ 90 °C und mehr bevorzugt von ≥ 30 °C bis ≤ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, $\leq$ 20 °C, bevorzugt $\leq$ 10 °C und mehr bevorzugt $\leq$ 5 °C beträgt.

Dieses thermoplastische Elastomer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Kreisfrequenz von 1/s) von $\geq$ 10 Pas bis $\leq$ 1000000 Pas auf. Vorzugsweise beträgt $|\eta^*| \geq$ 100 Pas bis $\leq$ 500000 Pas, mehr bevorzugt $\geq$ 1000 Pas bis $\leq$ 200000 Pas.

Der Betrag der komplexen Viskosität $|\eta^*|$ beschreibt das Verhältnis der viskoelastischen Moduln G' (Speichermodul) und G" (Verlustmodul) zur Anregungsfrequenz $\omega$ in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

In einer weiteren bevorzugten Ausführungsform umfasst das Aufbaumaterial ein thermoplastisches Polyurethan-Elastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von $\geq$ 25 °C aufweist.

Gegebenenfalls können bei der Reaktion zu diesem Polyurethan weiterhin Diole des Molekulargewichtsbereichs von $\geq$ 62 bis $\leq$ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe umfassend: 2,2,4-Trimethyl-hexamethylendiisocyanat, Ethylethylendiisocyanat, nicht-symmetrische Isomere des Dicyclohexylmethandiisocyanat (H$_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanato-but-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI und/oder PDI als Polyisocyanatkomponente.

Diese Polyolkomponente weist ein Polyesterpolyol auf, welches einen Stockpunkt (No Flow Point, ASTM D5985) von $\geq$ 25 °C, vorzugsweise $\geq$ 35 °C, mehr bevorzugt $\geq$ 35 °C bis $\leq$ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-C$_4$- bis C$_{10}$-Dicarbonsäuren mit einem oder mehreren C$_2$- bis C$_{10}$-Diolen. Sie weisen bevorzugt ein zahlenmittleres Molekulargewicht M$_n$ von $\geq$ 400 g/mol bis $\leq$ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von $\geq$ 25 bis $\leq$ 170 mg KOH/g und/oder eine Viskosität (75 °C, DIN 51550) von $\geq$ 50 bis $\leq$ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Kreisfrequenz von 1/s) von $\geq$ 4000 Pas bis $\leq$ 160000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

   a) Polyesterdiolen eines über 600 liegenden Molekulargewichts und gegebenenfalls

   b) Diolen des Molekulargewichtsbereichs von 62 bis 600 g/mol als Kettenverlängerungsmittel mit

   c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für $\geq$ 1 Minute (bevorzugt $\geq$ 1 Minute bis $\leq$ 30 Minuten, mehr bevorzugt $\geq$ 10 Minuten bis $\leq$ 15 Minuten), ein Speichermodul G' (bestimmt bei der jeweils herrschenden Temperatur mit einem Platte/Platte-Oszillationsviskosimeter gemäß ISO 6721-10 bei einer Kreisfrequenz von 1/s) von $\geq$ 100 kPa bis $\leq$ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10 bei einer Kreisfrequenz von 1/s) von $\geq$ 10 MPa aufweist.

Die vorliegende Patentschrift offenbart ferner einen Gegenstand, zumindest teilweise hergestellt durch ein additives Fertigungsverfahren, wobei der Gegenstand eine durch ein erfindungsgemäßes Verfahren behandelte Oberfläche aufweist und diese Oberfläche einen Mittenrauwert Ra (DIN EN ISO 4287) von $\leq$ 100 $\mu$m aufweist. Vorzugsweise beträgt der Mittenrauwert Ra (DIN EN ISO 4287) von $\leq$ 50 $\mu$m, mehr bevorzugt Mittenrauwert Ra (DIN EN ISO 4287) von $\leq$ 25 $\mu$m.

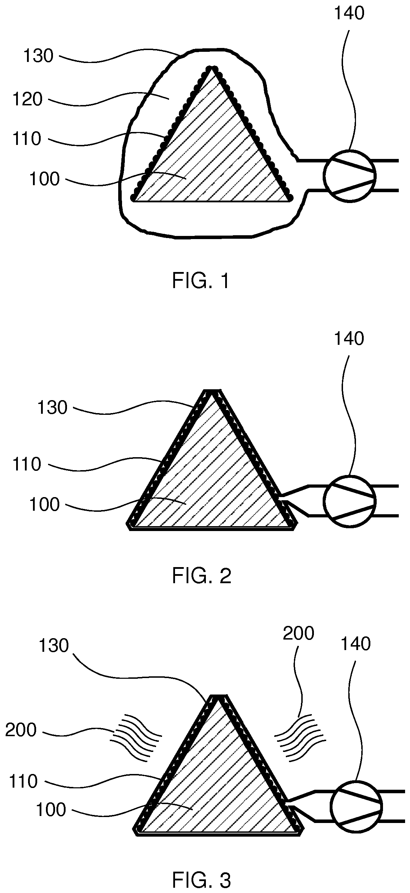

Die Erfindung wird mit Bezug auf die nachfolgenden Figuren weiter erläutert, ohne jedoch darauf beschränkt zu sein. FIG. 1 bis 6 zeigen Schritte im erfindungsgemäßen Verfahren.

FIG. 1 zeigt die Situation nach Schritt II) des erfindungsgemäßen Verfahrens. Ein beispielsweise durch ein Schmelzschichtungsverfahren (FDM) hergestellter Gegenstand 100, dessen Aufbaumaterial beispielsweise ein thermoplastisches Polyurethan enthält und eine Temperatur $T_G$, von 115 °C aufweist, wurde bereitgestellt. Die Oberfläche 110 des Gegenstands 100 weist die für das FDM-Verfahren häufig charakteristische Welligkeit in Aufbaurichtung auf, welche durch die Aufeinanderschichtung der einzelnen Filamentlagen des Aufbaumaterials bedingt ist. Der Gegenstand 100 wurde in einen flexiblen Kunststoffbeutel 130, wie er in Harzinfusions-Anlagen zur Herstellung von faserverstärkten Kunststoffen eingesetzt werden kann, eingehüllt. Dieser Kunststoffbeutel 130 definiert somit die Begrenzung des Volumens 120, in welchem der Gegenstand 100 platziert ist. Im vorliegenden Fall weist die Begrenzung in Form des flexiblen Kunststoffbeutels 130 keine inflexiblen Abschnitte auf. Der Kunststoffbeutel 130 ist über eine Vakuumpumpe 140 evakuierbar und, bei einer Umkehr der Luftförderrichtung, auch belüftbar. Als Material für den Kunststoffbeutel 130 eignet sich, aufgrund der geringen Haftung zu Polyurethanen, ein Polyethylen-Polymer.

FIG. 2 zeigt die Situation nach Schritt III) des erfindungsgemäßen Verfahrens. Mittels der Vakuumpumpe 140 wurde das von dem flexiblen Kunststoffbeutel 130 eingeschlossene Volumen evakuiert. Der flexible Kunststoffbeutel 130 schmiegt sich daher an die Oberfläche 110 des Gegenstands 100 an, wodurch ein Druck auf die Oberfläche 110 ausgeübt wird.

FIG. 3 zeigt die Situation während des Schritts IV) im erfindungsgemäßen Verfahren. Schematisch dargestellte Wärmestrahlung 200 erwärmt die Oberfläche 110 des Gegenstands 100 durch den flexiblen Kunststoffbeutel 130 hindurch. Bei einem Material mit einer Temperatur $T_{G'}$ von 115 °C kann die zugeführte Wärmeenergie beispielsweise so bemessen sein, dass die Oberfläche 110 auf eine Temperatur von 120 °C erwärmt wird. Durch die Kombination von Wärme und dem mittels des flexiblen Kunststoffbeutels 130 ausgeübten Drucks kommt es zu einer gezielten Verformung der Oberfläche 110. Dieses kann beispielsweise für eine Zeitdauer von 10 Minuten durchgeführt werden.

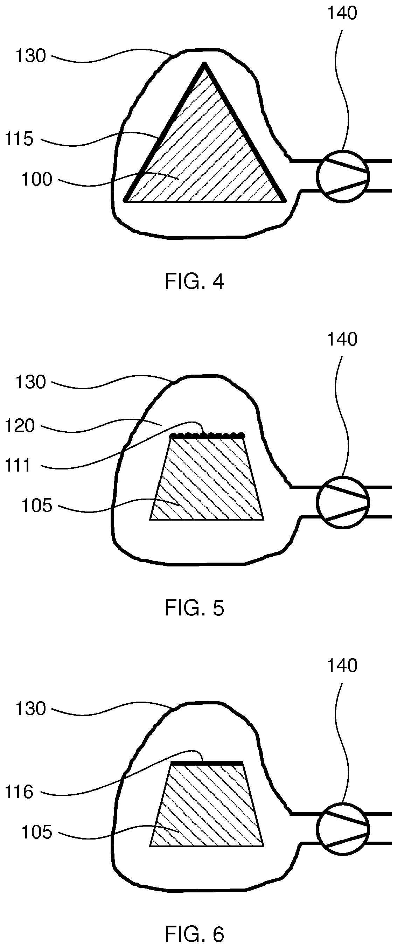

Anschließend wird die Oberfläche 110 soweit abgekühlt, dass ihre Temperatur unterhalb der Temperatur $T_{G'}$ liegt. Die Vakuumpumpe 140 fördert nun Luft in das Innere des flexiblen Kunststoffbeutels 130, welcher sich von der in Schritt III) geglätteten Oberfläche 115 ablöst. Diese Situation ist in FIG. 4 abgebildet.

FIG. 5 und 6 zeigen Stationen in einem erfindungsgemäßen Verfahren, in dem ein Substrat 105 mit einer einzigen Lage des Aufbaumaterials beschichtet wurde, so dass eine Oberfläche 111 erhalten wurde. Die Oberfläche 115 weist die für das FDM-Verfahren häufig charakteristische Welligkeit auf, welche durch das Ablegen der Filamentstränge nebeneinander in einer Lage bedingt ist. Diese Oberfläche wird einer Glättung durch das erfindungsgemäße Verfahren unterzogen einschließlich Schritten, die analog zu den in FIG. 2 und 3 gezeigten Schritten sind (nicht dargestellt).

FIG. 5 zeigt die Situation nach Schritt II) des erfindungsgemäßen Verfahrens. Ein durch ein Schmelzschichtungsverfahren (FDM) beschichtetes Substrat 105, dessen Aufbaumaterial beispielsweise ein thermoplastisches Polyurethan enthält und eine Temperatur $T_{G'}$ von 115 °C aufweist, wurde bereitgestellt. Hierbei kann es sich um ein Obermaterial für Schuhe mit einer durch FDM gebildeten Oberfläche handeln. Diese Anordnung wurde in einen flexiblen Kunststoffbeutel 130, wie er in Harzinfusions-Anlagen zur Herstellung von faserverstärkten Kunststoffen eingesetzt werden kann, eingehüllt. Dieser Kunststoffbeutel 130 definiert somit die Begrenzung des Volumens 120, in welchem das beschichtete Substrat platziert ist. Im vorliegenden Fall weist die Begrenzung in Form des flexiblen Kunststoffbeutels 130 keine inflexiblen Abschnitte auf. Der Kunststoffbeutel 130 ist über eine Vakuumpumpe 140 evakuierbar und, bei einer Umkehr der Luftförderrichtung, auch belüftbar. Als Material für den Kunststoffbeutel 130 eignet sich, aufgrund der geringen Haftung zu Polyurethanen, ein Polyethylen-Polymer.

FIG. 6 zeigt die Situation, bevor das Substrat 105 mit seiner geglätteten Oberfläche 116 aus der Begrenzung entnommen werden kann.

FIG. 7 zeigt den Speichermodul G' und Verlustmodul G" als Funktion der Temperatur bestimmt durch dynamisch-mechanische Analyse gemäß an ISO 6721 bei einer Kreisfrequenz von 1/s für das Aufbaumaterial Desmopan DP 85085A.

Beispiele

Die Erfindung wird weiterhin anhand der nachfolgenden Beispiele erläutert, ohne jedoch darauf beschränkt zu sein.

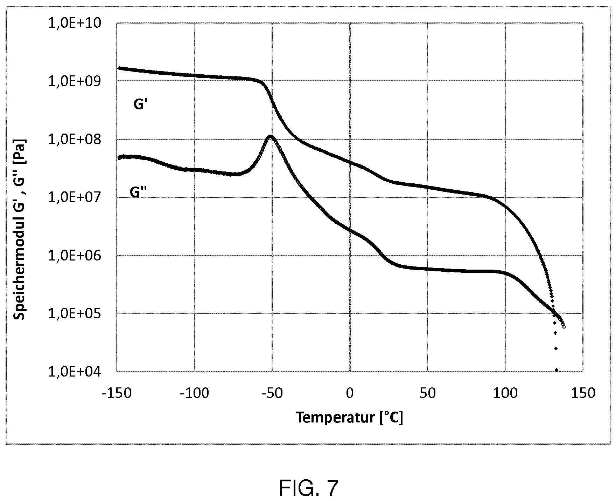

Probenkörper wurde mittels eines FDM-Verfahrens aus dem Aufbaumaterial Desmopan DP 85085A, einem von der Covestro AG, Leverkusen, Deutschland erhältlichen Polyester/Polyether Hybrid -basierten thermoplastischen Polyurethan mit einer Shore-Härte (DIN ISO 7619-1) von 85 Shore A und einer Temperatur $T_{G'}$, bei der der Speichermodul G' (bestimmt durch dynamisch-mechanische Analyse gemäß an ISO 6721 bei einer Kreisfrequenz von 1/s, Graph siehe Figur 7) 10 MPa beträgt, von 89 °C, hergestellt.

In einer Vakuumlaminieranlage (Photovoltaic Laminator LM-50x50 Hersteller NPC Inc.) mit einer Kammer bestehend aus einem beheizbaren, glatten Metallboden und einem Membrandeckel wurden die Probenkörper zwischen zwei Abdeckfolien aus Polytetrafluoroethylen eingebracht. Der Metallboden wurde für zwei verschiedene Versuche bei 106 °C (Versuch 2 in Tabelle 1) bzw. bei 116 °C (Versuch 3 in Tabelle 1) mit jeweils neuen Probenkörpern vorgeheizt. Anschließend wurde während eines Zeitraums von 5 Minuten ein Vakuum innerhalb der Kammer von ca. 100 mbar angelegt. Zusätzlich wurde auf die Außenseite der Folie ein Überdruck von 500 mbar aufgebracht. Nach einer Dauer von 10 Minuten wurde der angelegte Überdruck und das erzeugte Vakuum beendet und die Probenkörper aus den Abdeckfolien entnommen. Ein optischer und haptischer Vergleich der Oberflächen der Probenkörper durch erfahrene Techniker kam zu dem Ergebnis, dass die Oberflächen nach der Behandlung deutlich glatter waren und keine Rillen auf der Oberfläche zu erkennen waren. Darüber hinaus wurde der Glanzwert der nach dem erfindungsgemäßen Verfahren behandelten Oberflächen der Probenkörper, die während des Verfahrens die Abdeckfolie berührt hatten ermittelt. Der Glanzwert wurde mit einem Byk Gardner Micro Tri Gloss bei einem Glanzwinkel von 85 ° bestimmt. Wie anhand der Glanzwerte in Tabelle 1 für die Probenkörper mit (Probennummer 2 und 3) beziehungsweise ohne erfindungsgemäße Behandlung (Probennummer 1) zu erkennen ist, weisen die nach dem erfindungsgemäßen Verfahren behandelten Probenkörper einen höheren Glanzwert auf als die unbehandelten Probenkörper.

Ergebnisse:

Tabelle 1: Glanzwerte von Vergleichskörper (Probennummer 1) und erfindungsgemäß (erfgm.) behandelten Probenkörpern (Probennummer 2 und 3)

| Probennummer | 1 (Vergleich) | 2 (erfgm.) | 3 (erfgm.) |
|---|---|---|---|
| Anpressdruck | 0 mbar | 500 mbar | 500 mbar |
| Temperatur Metallboden | Raumtemperatur (23 °C) | 106 °C | 116 °C |
| G' von DP 85085A bei Temperatur Metallboden | 22,4 MPa | 5,0 MPa | 2,2 MPa |
| Glanzwert | 4,9 | 9,3 | 11,2 |

**Patentansprüche**

1. Verfahren zum Behandeln wenigstens eines Teils einer Oberfläche (110, 111) eines Gegenstands (100, 105), umfassend den Schritt:

   I) Bereitstellen des Gegenstands (100, 105), wobei wenigstens ein Teil einer Oberfläche (110, 111) des Gegenstands durch ein additives Fertigungsverfahren aus einem Aufbaumaterial hergestellt wurde, wobei das Aufbaumaterial eine Temperatur $T_{G'}$ aufweist, bei der der Speichermodul G' des Aufbaumaterials , bestimmt durch dynamisch-mechanische Analyse gemäß ISO 6721 bei einer Kreisfrequenz von 1/s, 10 MPa beträgt;

   **dadurch gekennzeichnet, dass** das Behandeln wenigstens eines Teils der Oberfläche (110, 111) das Einwirken von Druck auf die Oberfläche bei einer Temperatur der Oberfläche, welche oberhalb der Temperatur $T_{G'}$ liegt, umfasst und
   dass das Verfahren weiterhin die Schritte umfasst:

   II) Platzieren des Gegenstands (100, 105) in ein evakuierbares Volumen (120) mit einer Begrenzung (130), welche flexible Abschnitte umfasst, die zur Kontaktierung mit der Oberfläche (110, 111) des Gegenstands vorgesehen sind, wobei das Material der Begrenzung (130) derart ausgewählt ist, dass es keine dauerhafte Verbindung zu dem über seine Temperatur $T_{G'}$ erwärmten und anschließend unterhalb seiner Temperatur $T_{G'}$ abgekühlten Aufbaumaterial eingeht;
   III) Evakuieren des Volumens (120), so dass wenigstens ein Teil der flexiblen Abschnitte der Begrenzung (130) des Volumens (120) die Oberfläche (110, 111) des Gegenstands (100, 105) kontaktieren;
   IV) Erwärmen wenigstens eines Teils der Oberfläche (110, 111) des Gegenstands (100, 105), während das Volumen (120) weiterhin evakuiert bleibt, für eine vorbestimmte Zeitdauer auf eine Temperatur, welche oberhalb der Temperatur $T_{G'}$ liegt;
   V) Abkühlen der Oberfläche (115, 116) des Gegenstands (100, 105) auf eine Temperatur, welche unterhalb der Temperatur $T_{G'}$ liegt;
   VI) Entfernen des Gegenstands (100, 105) aus dem Volumen (120).

2. Verfahren gemäß Anspruch 1, **dadurch gekennzeichnet, dass** die Begrenzung (130) des evakuierbaren Volumens (120) keine inflexiblen Abschnitte aufweist.

3. Verfahren gemäß Anspruch 1 oder 2, **dadurch gekennzeichnet, dass** das Material der flexiblen Abschnitte der Begrenzung (130) des evakuierbaren Volumens (120) ausgewählt ist aus der Gruppe umfassend: Polyethylen, Polypropylen, Polyvinylchlorid, Polytetrafluoroethylen oder einer Kombination aus mindestens zwei hiervon.

4. Verfahren gemäß einem der Ansprüche 1 bis 2, **dadurch gekennzeichnet, dass** das Material der flexiblen Abschnitte der Begrenzung (130) des evakuierbaren Volumens (120) ausgewählt ist aus der Gruppe umfassend:

vernetztes Polyethylen, vernetztes Polypropylen, vernetztes Polyvinylchlorid, vernetztes Polytetrafluoroethylen, Silikonkautschuk, Fluorsilikonkautschuk, Fluorkautschuk oder einer Kombination aus mindestens zwei hiervon.

5. Verfahren gemäß einem der Ansprüche 1 bis 4, **dadurch gekennzeichnet, dass** in Schritt II) die flexiblen Abschnitte der Begrenzung (130) einen durchschnittlichen Druck von $\geq$ 10 kPa bis $\leq$ 1000 kPa auf die Oberfläche (110, 111) des Gegenstands (100) ausüben.

6. Verfahren gemäß einem der Ansprüche 1 bis 5, **dadurch gekennzeichnet, dass** die Herstellung des Gegenstands mittels des additiven Fertigungsverfahrens die Schritte umfasst:

- Auftragen einer Schicht aus, das Aufbaumaterial aufweisenden, Partikeln auf eine Zielfläche;
- Einwirken von Energie auf einen ausgewählten Teil der Schicht, entsprechend einem Querschnitt des Gegenstands, so dass die Partikel im ausgewählten Teil verbunden werden;
- Wiederholen der Schritte des Auftragens und des Einwirkens von Energie für eine Mehrzahl von Schichten, so dass die verbundenen Teile der benachbarten Schichten sich verbinden, um den Gegenstand zu bilden.

7. Verfahren gemäß Anspruch 6, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:

- Bestrahlen eines ausgewählten Teils der Schicht, entsprechend einem Querschnitt des Gegenstandes, mit einem Energiestrahl, so dass die Partikel im ausgewählten Teil verbunden werden.

8. Verfahren gemäß Anspruch 6, **dadurch gekennzeichnet, dass** das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:

- Auftragen einer Flüssigkeit auf einen ausgewählten Teil der Schicht, entsprechend einem Querschnitt des Gegenstandes, wobei die Flüssigkeit die Absorption der einwirkenden Energie in den von ihr kontaktierten Bereichen der Schicht relativ zu den nicht von ihr kontaktierten Bereichen erhöht;
- Bestrahlen der Schicht, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

9. Verfahren gemäß einem der Ansprüche 1 bis 5, **dadurch gekennzeichnet, dass** die Herstellung des Gegenstands mittels des additiven Fertigungsverfahrens die Schritte umfasst:

- Auftragen eines Filaments eines zumindest teilweise geschmolzenen Aufbaumaterials auf einen Träger, so dass eine Lage des Aufbaumaterials erhalten wird, welche einem ersten ausgewählten Querschnitt des Gegenstands entspricht;
- Optional Auftragen eines Filaments des zumindest teilweise geschmolzenen Aufbaumaterials auf eine zuvor aufgetragene Lage des Aufbaumaterials, so dass eine weitere Lage des Aufbaumaterials erhalten wird, welche einem weiteren ausgewählten Querschnitt des Gegenstands entspricht und welche mit der zuvor aufgetragenen Lage verbunden ist;
- Optional Wiederholen des Schritts des Auftragens eines Filaments des zumindest teilweise geschmolzenen Aufbaumaterials auf eine zuvor aufgetragene Lage des Aufbaumaterials, bis der Gegenstand gebildet ist.

10. Verfahren gemäß einem der Ansprüche 1 bis 9, **dadurch gekennzeichnet, dass** das Aufbaumaterial ein thermoplastisches Polyurethan-Elastomer umfasst, welches einen Schmelzbereich (DSC, Differential Scanning Calorimetry; zweite Aufheizung mit Aufheizrate 5 K/min) von $\geq$ 20 °C bis $\leq$ 200 °C aufweist, eine Shore-Härte gemäß DIN ISO 7619-1 von $\geq$ 40 A bis $\leq$ 85 D aufweist und eine Schmelzvolumenrate (melt volume rate, MVR) gemäß ISO 1133 (190 °C, 10 kg) von $\geq$ 25 bis $\leq$ 190 cm$^3$/10 min, bevorzugt von $\geq$ 25 bis $\leq$ 90 cm$^3$/10 min aufweist.

11. Verfahren gemäß einem der Ansprüche 1 bis 10, **dadurch gekennzeichnet, dass** das Aufbaumaterial ein thermoplastisches Polyurethan-Elastomer umfasst, welches

einen Schmelzbereich (DSC, Differential Scanning Calorimetry; zweite Aufheizung mit Aufheizrate 5 K/min) von $\geq$ 20 °C bis $\leq$ 240 °C, bevorzugt von $\geq$ 20 °C bis $\leq$ 200 °C aufweist,

eine Shore A Härte gemäß DIN ISO 7619-1 von ≥ 40 A bis ≤ 85 D aufweist,

bei einer Temperatur T eine Schmelzvolumenrate (melt volume rate, MVR) gemäß ISO 1133 (10 kg) von 5 bis 15 cm$^3$/10 min aufweist und

eine Änderung der Schmelzvolumenrate (10 kg) bei einer Erhöhung dieser Temperatur T um 20 °C von ≤ 90 cm$^3$/10 min aufweist.

**12.** Verfahren gemäß einem der Ansprüche 1 bis 11, wobei das Aufbaumaterial ein thermoplastisches Polyurethanelastomer umfasst, das erhältlich ist aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 2,5

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

**13.** Verfahren gemäß einem der Ansprüche 1 bis 9, **dadurch gekennzeichnet, dass** das Aufbaumaterial ein thermoplastisches Polyurethan-Elastomer umfasst, welches einen Schmelzbereich (DSC, differential scanning calorimetry; 2. Aufheizung mit Aufheizrate 5 K/min.) von ≥ 20 °C bis ≤ 100 °C aufweist und einen Betrag der komplexen Viskosität $|\eta^*|$ (bestimmt durch Viskosimetriemessung in der Schmelze mit einem Platte/Platte-Oszillationsscherviskosimeter bei 100 °C und einer Kreisfrequenz von 1/s) von ≥ 10 Pas bis ≤ 1000000 Pas aufweist.

**14.** Verfahren gemäß einem der Ansprüche 1 bis 13 , **dadurch gekennzeichnet, dass** das Aufbaumaterial ein thermoplastisches Polyurethan-Elastomer umfasst, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

## Claims

**1.** Method of treating at least part of a surface (110, 111) of an article (100, 105), comprising the step of:

I) providing the article (100, 105), at least part of a surface (110, 111) of the article having been produced by an additive manufacturing method from a build material, and the build material being at a temperature $T_{G'}$ at which the storage modulus G' of the build material, determined by dynamic-mechanical analysis according to ISO 6721 at an angular frequency of 1/s, is 10 MPa;

**characterized in that** the treating of at least part of the surface (110, 111) comprises the action of pressure on the surface at a temperature of the surface above the temperature $T_{G'}$ and

**in that** the method further comprises the steps of:

II) placing the article (100, 105) into an evacuable volume (120) having a boundary (130) comprising flexible sections intended for contact with the surface (110, 111) of the article, wherein the material for the boundary (130) is selected such that it does not enter into any permanent bond with the build material that has been heated above its temperature $T_{G'}$ and then cooled below its temperature $T_{G'}$;

III) evacuating the volume (120), such that at least some of the flexible sections of the boundary (130) of the volume (120) come into contact with the surface (110, 111) of the article (100, 105);

IV) heating at least a portion of the surface (110, 111) of the article (100, 105), while the volume (120) still remains evacuated, for a predetermined period of time to a temperature above the temperature $T_{G'}$;

V) cooling the surface (115, 116) of the article (100, 105) to a temperature below the temperature $T_{G'}$;

VI) removing the article (100, 105) from the volume (120) .

**2.** Method according to Claim 1, **characterized in that** the boundary (130) of the evacuable volume (120) does not have any inflexible sections.

**3.** Method according to Claim 1 or 2, **characterized in that** the material of the flexible sections of the boundary (130) of the evacuable volume (120) is selected from the group comprising: polyethylene, polypropylene, polyvinyl chloride, polytetrafluoroethylene or a combination of at least two of these.

4. Method according to either of Claims 1 and 2, **characterized in that** the material of the flexible sections of the boundary (130) of the evacuable volume (120) is selected from the group comprising: crosslinked polyethylene, crosslinked polypropylene, crosslinked polyvinyl chloride, crosslinked polytetrafluoroethylene, silicone rubber, fluorosilicone rubber, fluoro rubber or a combination of at least two of these.

5. Method according to any of Claims 1 to 4, **characterized in that**, in step II), the flexible sections of the boundary (130) exert an average pressure of $\geq$ 10 kPa to $\leq$ 1000 kPa on the surface (110, 111) of the article (100).

6. Method according to any of Claims 1 to 5, **characterized in that** the production of the article by means of the additive manufacturing method comprises the steps of:

   - applying a layer of particles including the build material to a target surface;
   - introducing energy into a selected portion of the layer corresponding to a cross section of the article such that the particles in the selected portion are bonded;
   - repeating the steps of applying and introducing energy for a multitude of layers, such that the bonded portions of the adjacent layers become bonded in order to form the article.

7. Method according to Claim 6, **characterized in that** the introducing of energy into a selected portion of the layer corresponding to a cross section of the article such that the particles in the selected portion are bonded comprises the following step:

   - irradiating a selected portion of the layer corresponding to a cross section of the article with a beam of energy, such that the particles in the selected portion are bonded.

8. Method according to Claim 6, **characterized in that** the introducing of energy into a selected portion of the layer corresponding to a cross section of the article such that the particles in the selected portion are bonded comprises the following steps:

   - applying a liquid to a selected portion of the layer corresponding to a cross section of the article, where said liquid increases the absorption of the energy introduced in the regions of the layer with which it comes into contact relative to the regions with which it does not come into contact;
   - irradiating the layer such that the particles in regions of the layer that come into contact with the liquid are bonded to one another and the particles in regions of the layer that do not come into contact with the liquid are not bonded to one another.

9. Method according to any of Claims 1 to 5, **characterized in that** the production of the article by means of the additive manufacturing method comprises the steps of:

   - applying a filament of an at least partly molten build material to a carrier, such that a layer of the build material is obtained, corresponding to a first selected cross section of the article;
   - optionally applying a filament of the at least partly molten build material to a previously applied layer of the build material, such that a further layer of the build material is obtained, which corresponds to a further selected cross section of the article and which is bonded to the layer applied beforehand;
   - optionally repeating the step of applying a filament of the at least partly molten build material to a previously applied layer of the build material until the article has been formed.

10. Method according to any of Claims 1 to 9, **characterized in that** the build material comprises a thermoplastic polyurethane elastomer having a melting range (DSC, differential scanning calorimetry; second heating at heating rate 5 K/min) of $\geq$ 20°C to $\leq$ 200°C, a Shore hardness according to DIN ISO 7619-1 of $\geq$ 40 A to $\leq$ 85 D and a melt volume rate (MVR) according to ISO 1133 (190°C, 10 kg) of $\geq$ 25 to $\leq$ 190 cm$^3$/10 min, preferably of $\geq$ 25 to $\leq$ 90 cm$^3$/10 min.

11. Method according to any of Claims 1 to 10, **characterized in that** the build material comprises a thermoplastic polyurethane elastomer having

   a melting range (DSC, differential scanning calorimetry; second heating at heating rate 5 K/min) of $\geq$ 20°C to $\leq$ 240°C, preferably of $\geq$ 20°C to $\leq$ 200°C,
   a Shore A hardness according to DIN ISO 7619-1 of $\geq$ 40 A to $\leq$ 85 D,

a melt volume rate (MVR) according to ISO 1133 (10 kg) at a temperature T of 5 to 15 cm$^3$/10 min and a change in the melt volume rate (10 kg) in the event of an increase in this temperature T by 20°C of $\leq$ 90 cm$^3$/10 min.

12. Method according to any of Claims 1 to 11, wherein the build material comprises a thermoplastic polyurethane elastomer obtainable from the reaction of the following components:

a) at least one organic diisocyanate
b) at least one compound having groups reactive toward isocyanate groups and having a number-average molecular weight (M$_n$) of $\geq$ 500 g/mol to $\leq$ 6000 g/mol and a number-average functionality of the totality of the components covered by b) of $\geq$ 1.8 to $\leq$ 2.5
c) at least one chain extender having a molecular weight (M$_n$) of 60-450 g/mol and a number-average functionality of the totality of the chain extenders covered by c) of 1.8 to 2.5.

13. Method according to any of Claims 1 to 9, **characterized in that** the build material comprises a thermoplastic polyurethane elastomer having a melting range (DSC, differential scanning calorimetry; 2nd heating at heating rate 5 K/min.) of $\geq$ 20°C to $\leq$ 100°C and a magnitude of the complex viscosity $|\eta^*|$ (determined by viscometry measurement in the melt with a plate/plate oscillation shear viscometer at 100°C and an angular frequency of 1/s) of $\geq$ 10 Pas to $\leq$ 1 000 000 Pas.

14. Method according to any of Claims 1 to 13, **characterized in that** the build material comprises a thermoplastic polyurethane elastomer obtainable from the reaction of a polyisocyanate component and a polyol component, said polyol component comprising a polyester polyol having a pour point (ASTM D5985) of $\geq$ 25°C.

**Revendications**

1. Procédé pour le traitement d'au moins une partie d'une surface (110, 111) d'un objet (100, 105), comprenant l'étape :

I) mise à disposition de l'objet (100, 105), au moins une partie d'une surface (110, 111) de l'objet ayant été réalisée par un procédé de fabrication additive à partir d'un matériau de construction, le matériau de construction présentant une température T$_{G'}$, à laquelle le module d'accumulation G' du matériau de construction, déterminé par analyse mécanique dynamique selon la norme ISO 6721 à une fréquence annulaire de 1/s, est de 10 MPa ;

**caractérisé en ce que** le traitement d'au moins une partie de la surface (110, 111) comprend l'action de pression sur la surface à une température de la surface qui est supérieure à la température T$_{G'}$ et **en ce que** le procédé comprend en outre les étapes :

II) placement de l'objet (100, 105) dans un volume (120) pouvant être mis sous vide présentant une délimitation (130), qui comprend des sections souples qui sont destinées à venir en contact avec la surface (110, 111) de l'objet, le matériau de la délimitation (130) étant choisi de manière telle qu'il ne participe pas à une liaison durable avec le matériau de construction chauffé au-dessus de sa température T$_{G'}$ et ensuite refroidi sous sa température T$_{G'}$ ;
III) mise sous vide du volume (120), de telle sorte qu'au moins une partie des sections souples de la délimitation (130) du volume (120) entre en contact avec la surface (110, 111) de l'objet (100, 105) ;
IV) chauffage d'au moins une partie de la surface (110, 111) de l'objet (100, 105), pendant que le volume (120) reste par ailleurs sous vide, pendant une durée prédéfinie à une température qui est supérieure à la température T$_{G'}$ ;
V) refroidissement de la surface (115, 116) de l'objet (100, 105) à une température qui est inférieure à la température T$_{G'}$ ;
VI) élimination de l'objet (100, 105) du volume (120).

2. Procédé selon la revendication 1, **caractérisé en ce que** la délimitation (130) du volume (120) pouvant être mis sous vide ne présente pas de sections qui ne sont pas souples.

3. Procédé selon la revendication 1 ou 2, **caractérisé en ce que** le matériau des sections souples de la délimitation (130) du volume (120) pouvant être mis sous vide est choisi dans le groupe comprenant : le polyéthylène, le polypropylène, le poly(chlorure de vinyle), le polytétrafluoroéthylène ou une combinaison d'au moins deux de ceux-ci.

4. Procédé selon l'une quelconque des revendications 1 à 2, **caractérisé en ce que** le matériau des sections souples de la délimitation (130) du volume (120) pouvant être mis sous vide est choisi dans le groupe comprenant : le polyéthylène réticulé, le polypropylène réticulé, le poly(chlorure de vinyle) réticulé, le polytétrafluoroéthylène réticulé, le caoutchouc de silicone, le caoutchouc de fluorosilicone, le caoutchouc fluoré ou une combinaison d'au moins deux de ceux-ci.

5. Procédé selon l'une quelconque des revendications 1 à 4, **caractérisé en ce que**, dans l'étape II), les sections souples de la délimitation (130) exercent une pression moyenne de $\geq 10$ kPa à $\leq 1000$ kPa sur la surface (110, 111) de l'objet (100).

6. Procédé selon l'une quelconque des revendications 1 à 5, **caractérisé en ce que** la fabrication de l'objet au moyen du procédé de fabrication additive comprend les étapes :

   - application d'une couche de particules présentant le matériau de construction sur une surface cible ;
   - action d'énergie sur une partie sélectionnée de la couche, correspondant à une section transversale de l'objet, de telle sorte que les particules dans la partie sélectionnée sont reliées ;
   - répétition des étapes d'application et d'action d'énergie pour une multitude de couches, de telle sorte que les parties reliées des couches adjacentes se relient pour former l'objet.

7. Procédé selon la revendication 6, **caractérisé en ce que** l'action d'énergie sur une partie sélectionnée de la couche, correspondant à une section transversale de l'objet, de telle sorte que les particules dans la partie sélectionnée sont reliées, comprend les étapes suivantes ;

   - irradiation d'une partie sélectionnée de la couche, correspondant à une section transversale de l'objet, par un rayon d'énergie de telle sorte que les particules dans la partie sélectionnée sont reliées.

8. Procédé selon la revendication 6, **caractérisé en ce que** l'action d'énergie sur une partie sélectionnée de la couche, correspondant à une section transversale de l'objet, de telle sorte que les particules dans la partie sélectionnée sont reliées, comprend les étapes suivantes :

   - application d'un liquide sur une partie sélectionnée de la couche, correspondant à une section transversale de l'objet, le liquide augmentant l'absorption de l'énergie qui agit dans les zones de la couche mises en contact avec celui-ci par rapport aux zones non mises en contact avec celui-ci ;
   - irradiation de la couche, de telle sorte que les particules dans les zones de la couche mises en contact avec le liquide sont reliées les unes aux autres et les particules dans les zones de la couche non mises en contact avec le liquide ne sont pas reliées les unes aux autres.

9. Procédé selon l'une quelconque des revendications 1 à 5, **caractérisé en ce que** la fabrication de l'objet au moyen du procédé de fabrication additive comprend les étapes :

   - application d'un filament d'un matériau de construction au moins partiellement fondu sur un support, de manière à obtenir une couche du matériau de construction qui correspond à une première section transversale sélectionnée de l'objet ;
   - éventuellement application d'un filament dudit matériau de construction au moins partiellement fondu sur une couche appliquée au préalable du matériau de construction de manière à obtenir une autre couche du matériau de construction qui correspond à une autre section transversale sélectionnée de l'objet et qui est reliée à la couche appliquée au préalable ;
   - éventuellement répétition de l'étape d'application d'un filament du matériau de construction au moins partiellement fondu sur une couche appliquée au préalable du matériau de construction jusqu'à ce que l'objet soit formé.

10. Procédé selon l'une quelconque des revendications 1 à 9, **caractérisé en ce que** le matériau de construction comprend un élastomère thermoplastique à base de polyuréthane, qui présente une plage de fusion (DSC, calorimétrie différentielle à balayage ; deuxième chauffage à une vitesse de chauffage de 5 K/min) de $\geq 20°C$ à $\leq 200°C$, une dureté Shore selon la norme DIN ISO 7619-1 de $\geq 40$ A à $\leq 85$ D et un indice de fluidité à chaud en volume (melt volume rate, MVR) selon la norme ISO 1133 (190°C, 10 kg) de $\geq 25$ à $\leq 190$ cm$^3$/10 min, de préférence de $\geq 25$ à $\leq 90$ cm$^3$/10 min.

11. Procédé selon l'une quelconque des revendications 1 à 10, **caractérisé en ce que** le matériau de construction comprend un élastomère thermoplastique à base de polyuréthane, qui présente

une plage de fusion (DSC, calorimétrie différentielle à balayage ; deuxième chauffage à une vitesse de chauffage de 5 K/min) de $\geq$ 20°C à $\leq$ 240°C, de préférence de $\geq$ 20°C à $\leq$ 200°C,
une dureté Shore A selon la norme DIN ISO 7619-1 de $\geq$ 40 A à $\leq$ 85 D,
un indice de fluidité à chaud en volume (melt volume rate, MVR) selon la norme ISO 1133 (10 kg) à une température T de 5 à 150 cm$^3$/10 min et
une modification de l'indice de fluidité à chaud en volume (10 kg) à une augmentation de cette température T de 20 °C de $\geq$ 90 cm$^3$/10 min.

12. Procédé selon l'une quelconque des revendications 1 à 11, le matériau de construction comprenant un élastomère thermoplastique à base de polyuréthane qui peut être obtenu par la réaction des composants :

a) au moins un diisocyanate organique,
b) au moins un composé présentant des groupes réactifs par rapport aux groupes isocyanate, lequel composé présente un poids moléculaire moyen en nombre ($M_n$) de $\geq$ 500 g/mole à $\leq$ 6000 g/mole et une fonctionnalité moyenne en nombre de la totalité des composants sous b) de $\geq$ 1,8 à $\leq$ 2,5,
c) au moins un agent d'allongement de chaîne présentant un poids moléculaire ($M_n$) de 60-450 g/mole et une fonctionnalité moyenne en nombre de la totalité des agents d'allongement de chaîne sous c) de 1,8 à 2,5.

13. Procédé selon l'une quelconque des revendications 1 à 9, **caractérisé en ce que** le matériau de construction comprend un élastomère thermoplastique à base de polyuréthane, qui présente une plage de fusion (DSC, calorimétrie différentielle à balayage ; 2ème chauffage à une vitesse de chauffage de 5 K/min) de $\geq$ 20°C à $\leq$ 100°C et qui présente une contribution de la viscosité complexe $|\eta^*|$ (déterminée par viscosimétrie en masse fondue à l'aide d'un viscosimètre à cisaillement par oscillation plaque/plaque à 100°C et à une fréquence angulaire de 1/s) de $\geq$ 10 Pa.s à $\leq$ 1.000.000 Pa.s.

14. Procédé selon l'une quelconque des revendications 1 à 13, **caractérisé en ce que** le matériau de construction comprend un élastomère thermoplastique à base de polyuréthane qui peut être obtenu par la réaction d'un composant polyisocyanate et d'un composant polyol, le composant polyol comprenant un polyester-polyol qui présente un point de figeage (ASTM D5985) $\geq$ 25°C.

FIG. 1

FIG. 2

FIG. 3

FIG. 4

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011089208 A1
- DE 102015205609 A1
- WO 2016022449 A1
- DE 102008027315 A1
- DE 2901774 A
- EP 0192946 A1

**In der Beschreibung aufgeführte Nicht-Patentliteratur**

- Polyurethane. **J.H. SAUNDERS ; K.C. FRISCH.** High Polymers. Verlag Interscience Publishers, 1962, vol. XVI
- **R. GÄCHTER ; H. MÜLLER.** Taschenbuch für Kunststoff- Additive. Hanser Verlag, 1990